# EUROPÄISCHE PATENTSCHRIFT

(11) **EP 2 323 880 B1**
(45) Veröffentlichungstag und Bekanntmachung des Hinweises auf die Patenterteilung: **07.09.2016**
(21) Anmeldenummer: 09777365.9
(22) Anmeldetag: 22.07.2009
(51) Int. Cl.: B60T 8/32

(54) **VERFAHREN UND VORRICHTUNG ZUR HYDRAULISCHEN BREMSDRUCKVERSTÄRKUNG**
METHOD AND DEVICE FOR HYDRAULIC BRAKE BOOSTING
PROCÉDÉ ET DISPOSITIF D AMPLIFICATION HYDRAULIQUE DE LA PRESSION DE FREINAGE

(30) Priorität: 06.08.2008 DE 102008036607
(43) Veröffentlichungstag der Anmeldung: 25.05.2011
(73) Patentinhaber: Lucas Automotive GmbH, 56070 Koblenz (DE)
(72) Erfinder: KNECHTGES, Josef, 56727 Mayen (DE); HELLER, Frank, 56154 Boppard (DE)
(74) Vertreter: Röthinger, Rainer
(86) Internationale Anmeldenummer: PCT/EP2009/005321
(87) Internationale Veröffentlichungsnummer: WO 2010/015329

(56) Entgegenhaltungen:
- EP-A- 0 867 350
- EP-A- 0 906 859
- DE-A1- 4 102 496
- DE-A1- 19 907 338

## Beschreibung

### Technisches Gebiet

Die Erfindung betrifft allgemein einen Bremsassistenten. Insbesondere betrifft die Erfindung eine Technik zur hydraulischen Bremsdruckverstärkung für eine FahrzeugBremsanlage

### Hintergrund

Im Stand der Technik sind sogenannte Bremsassistenten bekannt, welche die Aufgabe haben, eine fahrergesteuerte Bremsung zu optimieren, wenn zu erkennen ist, dass eine Gefahrensituation vorliegt. Eine Gefahrensituation wird beispielsweise an Hand eines charakteristischen Verlaufs einer fahrergesteuerten Betätigung der Bremsanlage festgestellt. Zu diesem Zweck kann in einem hydraulischen Bremssystem, bei dem der Fahrer zum Bremsen einen Druck in einem Hauptzylinder erzeugt, die fahrergesteuerte Betätigung der Bremsanlage mit Hilfe eines Drucksensors bestimmt werden, der den im Hauptzylinder herrschenden Druck erfasst. Auf diese Weise wird eine Gefahrensituation dann erkannt, wenn der Hauptzylinder-Druck mit einer Geschwindigkeit ansteigt, die oberhalb eines vorbestimmten Schwellenwertes liegt (Panikbremsung).

Zur Optimierung der Bremsung bei festgestellter Gefahrensituation lösen bekannte Bremsassistenten allgemein eine ABS-Bremsung aus. Mit anderen Worten wird ein hydraulischer Druck im Bremssystem fahrerunabhängig so weit gesteigert, dass die Bremsanlage des Kraftfahrzeugs eine maximale Zuspannkraft an den Radbremsen erzeugt. Gleichzeitig verhindert ein ABS-System durch geeignetes Beeinflussen der Betätigungsdrücke an den Radbremsen einen Verlust einer Fahrstabilität des Kraft-fahrzeugs.

Gängige hydraulische Kraftfahrzeug-Bremssysteme sind mit ABS- oder ESC-Systemen (Electronic Stability Control, elektronische Stabilitätskontrolle) ausgerüstet, so dass für ein Unterstützen einer Bremsung mittels eines Bremsassistenten alle erforderlichen Teile bereits verbaut sind. Allerdings ist es für einen Einsatz eines Bremsassistenten erforderlich, dass der Druck im Hauptzylinder sehr zuverlässig bestimmt wird, um irrtümliche Bremsunterstützungen zu vermeiden. Die aus diesem Grund verbauten Drucksensoren hoher Güte oder redundanten Drucksensoren steigern jedoch in signifikanter Weise die Kosten des Bremssystems.

Aus EP 0 867 350 A2 ist eine Bremsregelungsanlage für ein Kraftfahrzeug mit einem elektronischen Steuergerät, einem Drucksensor sowie Hilfs-Bremskreis-Komponenten bekannt, wobei die Bremsregelungsanlage dazu ausgelegt ist, eine Vorsteuerdruckbasierte Bremsdruckverstärkung zu erzeugen. Die Bremsdruckverstärkung erfolgt durch Umschalten von einem Normalbetrieb in einen durch die Hilfs-Bremskreis-Komponenten realisierten Hilfsbetrieb, wenn der gemessene Vorsteuerdruck einen vorgegebenen Schwellenwert überschreitet.

DE 41 02 496 A1 lehrt eine Bremsdruck-Steuereinrichtung zur Einstellung eines Bremsdrucks derart, dass sich eine optimale Fahrzeugverzögerung einstellt. Die Bremsdruck-Steuereinrichtung bewirkt die Erzeugung eines erhöhten Bremsdruckes, wenn ein gemessener Vorsteuerdruck einen vorgegebenen Schwellenwert überschreitet.

Aus EP 0 906 859 A1 ist eine Bremsanlage zur Bremsdruckverstärkung bekannt, welche, in Abhängigkeit einer aus einem gemessenen Vorsteuerdruck abgeleiteten Bremspedalkraft, einen an den Radbremsen anliegenden Bremsdruck erzeugt, der zur Bremspedalkraft in einem vorgegebenen Verhältnis in Form eines nicht-linearen Verstärkungsfaktors erhöht ist.

Aus DE 199 07 338 A1 ist ein Bremssystem bekannt, welches den am Hauptbremszylinder gemessenen Druck einer Plausibilitätsprüfung unterzieht, indem die gemessenen Druckwerte mit gemessenen Werten des Bremspedalwegs verglichen werden.

Zudem existieren hydraulische Bremssysteme, die aus Kostengründen vollständig ohne einen Sensor für den Hauptzylinderdruck auskommen müssen. In diesen Bremssystemen werden somit bislang keine hydraulischen Bremsassistenten implementiert.

Es ist daher Aufgabe der Erfindung, eine Technik bereitzustellen, mittels derer die oben erwähnten Einschränkungen überwunden werden, um eine Bremsassistenten-Funktion in einem Kraftfahrzeug-Bremssystem zu implementieren.

### Kurzer Abriss

Gemäß einem ersten Aspekt umfasst ein Verfahren zur hydraulischen Bremsdruckverstärkung in einem hydraulischen Kraftfahrzeug-Bremssystem, wobei ein erster Druckanteil eines Bremsdrucks im Bremssystem fahrergesteuert erzeugt wird, die Schritte des Erfassens eines auf eine Verzögerung des Fahrzeugs hinweisenden Verzögerungswerts und des Erzeugens eines zusätzliche zweiten Druckanteils in Abhängigkeit eines zweiten Druckwertes.

Das fahrergesteuerte Erzeugen des ersten Druckanteils kann eine mechanische oder pneumatische Bremskraftverstärkung durch einen dem Hauptzylinder vorgelagerten Bremskraftverstärker umfassen. Der auf die Verzögerung des Fahrzeugs hinweisende Verzögerungswert kann aus einer Geschwindigkeit des Kraftfahrzeugs abgeleitet sein. Der Verzögerungswert kann mittelbar oder unmittelbar aus wenigstens einem Signal wenigstens eines Raddrehzahlsensors abgeleitet sein. Der Verzögerungswert kann alternativ oder zusätzlich hierzu auch auf der Basis eines oder mehrerer anderer Sensorsignale bestimmt sein.

Der zweite Druckanteil kann derart erzeugt werden, dass er im Wesentlichen proportional zum ersten Druckanteil ist. Alternativ hierzu kann auch ein anderer Zusammenhang zwischen dem ersten und dem zweiten Druckanteil vorliegen, beispielsweise mit zumindest teilweise exponentialem oder logarithmischem Verlauf. Es kann auch ein konstanter Unterschied ("Offset") zwischen den beiden Druckanteilen bestehen bzw. ein zweiter Druckanteil mit einem konstanten Betrag verwendet werden.

Der zweite Druckanteil kann in Abhängigkeit eines Absolutwerts oder einer Änderungsgeschwindigkeit des Verzögerungswerts erzeugt werden. Dabei kann das Verfahren einen Vergleich des erfassten Verzögerungswerts mit einem Schwellenwert umfassen. Der Schwellenwert kann vorbestimmt sein oder von Parametern abhängen. Der Vergleich mit dem Schwellenwert kann auch von weiteren Bedingungen abhängen, beispielsweise einer absoluten Verzögerung des Kraftfahrzeugs oder einem absoluten Bremsdruck bzw. -anteil.

Das Verfahren kann ferner den Schritt des Ansteuerns einer Druckbereitstellungseinrichtung zur Erzeugung des zweiten Druckanteils umfassen. Dieses Ansteuern kann ein Aktivieren bzw. Deaktivieren einer elektrisch angetriebenen Pumpe und/oder ein Öffnen bzw. Schließen einer Zuleitung eines Speichers (z. B. eines Membranspeichers) für unter Druck stehendes Hydraulikfluid (z. B. mittels eines elektrisch betätigten Ventils) umfassen.

Weiterhin kann das Verfahren den Schritt des Begrenzens des zweiten Druckanteils und/oder des Bremsdrucks umfassen. Dieser Schritt kann ein Ansteuern einer Druckbegrenzungseinrichtung, beispielsweise eines ISO-Ventils, enthalten. Ein Wert, auf den der zweite Druckanteil und/oder der Bremsdruck begrenzt wird, kann vorbestimmt sein oder von Parametern abhängen.

Das Verfahren umfasst ferner den Schritt des Bestimmens eines dem ersten Druckanteil zugeordneten ersten Druckwerts auf der Basis des Verzögerungswerts. Der erste Druckwert kann auch weiteren Komponenten des Fahrzeugs bereitgestellt werden.

Das Verfahren umfasst auch den Schritt des Überprüfens einer Plausibilität eines mittels eines Drucksensors bestimmten und dem ersten Druckanteil zugeordneten zweiten Druckwertes auf Basis des ersten Druckwertes. Dabei kann berücksichtigt werden, dass sich der dem ersten Druckanteil zugeordnete erste Druckwert gegenüber dem mittels des Drucksensors bestimmten zweiten Druckwert zeitlich langsamer bzw. verzögert verändert. Dieser Unterschied kann durch ein Strömungsverhalten eines Hydraulikfluids (z. B. aufgrund einer Drosselung) in einem hydraulischen System bedingt sein.

Das Verfahren kann den Schritt des Vergleichens des ersten Druckwerts mit dem zweiten Druckwert umfassen. Dem Vergleichen kann ein Skalieren bzw. Beaufschlagen mit einem konstanten Summanden eines oder beider Signale derart vorausgehen, dass die beiden Druckwerte im Wesentlichen gleich sind, wenn das Bremssystem keiner Störung unterworfen ist. Dem Vergleichen kann auch eine zeitliche Verzögerung von Messwerten eines der beiden Signale vorausgehen, um das Strömungsverhalten des Hydraulikfluids zu berücksichtigen.

Bei Bestimmen einer mangelnden Plausibilität des zweiten Druckwerts kann das Verfahren den Schritt des Ausgebens eines Warnsignals umfassen. Das Warnsignal kann sich an einen Fahrer des Kraftfahrzeugs richten und es kann beispielsweise eine optische, akustische oder/oder haptische Warnung umfassen. Der Schritt des Ausgebens einer Warnung kann auch ein Schreiben einer Meldung in einen Fehlerspeicher umfassen. Ferner kann eine Funktionalität eines hydraulischen Bremsassistenten deaktiviert werden, wenn eine mangelnde Plausibilität bestimmt wurde.

Gemäß einem zweiten Aspekt wird ein Computerprogrammprodukt mit Programmcodemitteln zur Durchführung des oben beschriebenen Verfahrens bereitgestellt, wenn das Computerprogrammprodukt auf einer Verarbeitungseinheit (z.B. einem elektrischen Steuergerät, auch ECU genannt) läuft. Eine solche Verarbeitungseinheit kann weitere Bremsfunktionalitäten des Kraftfahrzeugs steuern, beispielsweise ABS oder ESP.

Das Computerprogrammprodukt kann auf einem computerlesbaren Datenträger gespeichert sein. Beispielsweise kann das Computerprogrammprodukt auf einem beweglichen Datenträger, wie beispielsweise einer Diskette, einer Festplatte, einer CD oder DVD, oder auf einem festen Datenträger, wie beispielsweise einem Halbleiterspeicher (etwa ein RAM, ROM, EPROM, EEPROM, NOVRAM oder FLASH) gespeichert sein.

Ein dritter Aspekt umfasst eine Vorrichtung zur hydraulischen Bremskraftverstärkung in einem hydraulischen Kraftfahrzeug-Bremssystem, wobei ein erster Druckanteil eines Bremsdrucks im Bremssystem fahrergesteuert erzeugbar ist, eine Erfassungseinrichtung zur Erfassung eines auf eine Verzögerung des Fahrzeugs hinweisenden Verzögerungswerts und eine Erzeugungseinrichtung zur Erzeugung eines zusätzlichen zweiten Druckanteils des Bremsdrucks in Abhängigkeit eines zweiten Druckwertes. Die Erfassungseinrichtung kann beispielsweise Sensoren umfassen, die ein Raddrehzahlsignal wenigstens eines Rades des Kraftfahrzeugs und/oder unmittelbar eine Fahrzeuggeschwindigkeit erfassen. Die Erzeugungseinrichtung kann beispielsweise eine elektrisch betätigte Pumpe aufweisen.

Die Vorrichtung umfasst ferner eine Bestimmungseinrichtung zur Bestimmung eines dem ersten Druckanteil zugeordneten ersten Druckwertes auf der Basis des Verzögerungswerts umfassen. Die Bestimmungseinrichtung kann ein dem ersten Druckwert entsprechendes Signal zur Verfügung stellen.

Die Vorrichtung umfasst eine Plausibilisierungseinrichtung zur Plausibilisierung eines mittels eines Drucksensors bestimmten und dem ersten Druckanteil zugeordneten zweiten Druckwerts auf Basis des ersten Druckwertes. Die Plausibilisierungseinrichtung kann mit der Bestimmungseinrichtung als eine gemeinsame Verarbeitungseinheit ausgebildet sein.

Die Vorrichtung kann außerdem eine Begrenzungseinrichtung zur Begrenzung des zweiten Druckanteils und/oder des Bremsdrucks umfassen. Die Begrenzungseinrichtung kann steuerbar sein, beispielsweise durch ein elektrisches Signal, wie ein Pulsbreiten- (PWM-) Signal, einen Strom, eine Spannung oder eine Frequenz eines elektrischen Signals.

### Kurze Beschreibung der Zeichnungen

Weitere Merkmale und Vorzüge der Erfindung werden nun im Zusammenhang mit den beigefügten Zeichnungen beschrieben, von denen:
- Fig. 1: einen schematischen Überblick über ein erstes Beispiel eines Kraftfahrzeug-Bremssystems zeigt;
- Fig. 2: eine erfindungsgemäße Variation des Kraftfahrzeug-Bremssystems von Fig. 1 zeigt;
- Fig. 3: ein hydraulisches Blockschaltbild einer hydraulischen Hydraulik-Baugruppe in einem Kraftfahrzeug-Bremssystem nach einer der Fign. 1 und 2 in einer Grundstellung zeigt;
- Fig. 4: die Hydraulik-Baugruppe nach Fig. 3 während einer hydraulischen Bremsdruckverstärkung zeigt;
- Fig. 5: ein Ablaufdiagramm eines Ausführungsbeispiels eines Verfahrens zur Bremsdruckverstärkung in einem Kraftfahrzeug-Bremssystem nach einer der Fign. 1 und 2 zeigt; und
- Fig. 6: exemplarische Verläufe von Parametern in einer Hydraulik-Baugruppe nach Fig. 4 während einer hydraulischen Bremsdruckverstärkung zeigt.

In den Figuren tragen identische bzw. einander entsprechende Elemente gleiche Bezugszeichen.

### Beschreibung bevorzugter Ausführungsbeispiele

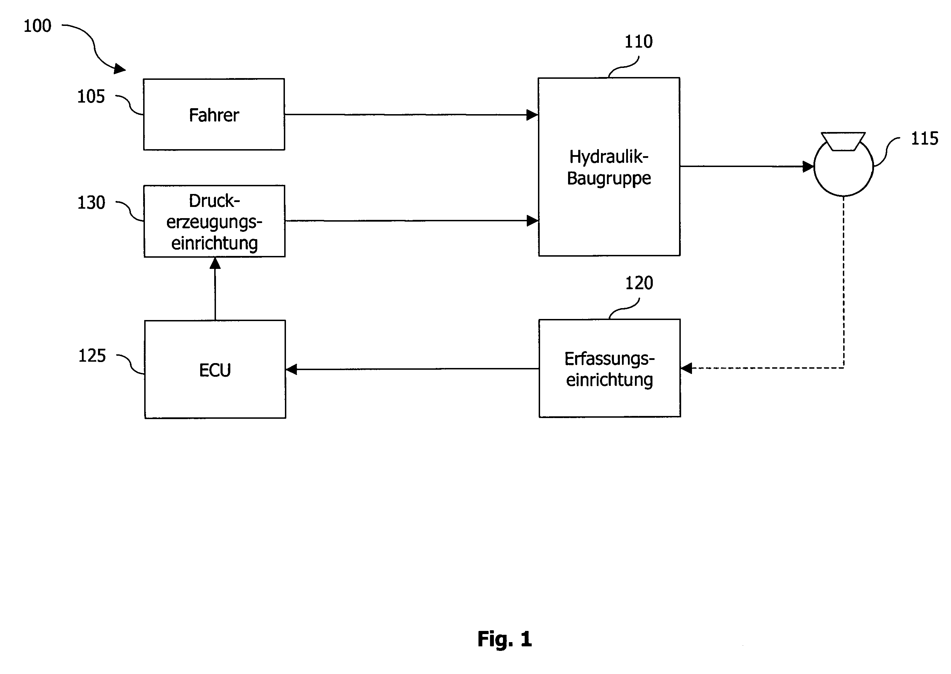

Fig. 1 zeigt ein Beispiel eines hydraulisches Kraftfahrzeug-Bremssystems 100, das von einem Fahrer 105 betätigt wird und eine Hydraulik-Baugruppe 110, wenigstens eine Radbremse 115, eine Erfassungseinrichtung 120, eine elektronische Steuereinheit (ECU) 125 und eine Druckerzeugungseinrichtung 130 umfasst.

Der Fahrer 105 erzeugt mittels der Hydraulik-Baugruppe 110 einen ersten Bremsdruckanteil. Ein zweiter Druckanteil in der Hydraulik-Baugruppe 110 wird durch die Druckerzeugungseinrichtung 130 erzeugt. Mittels der addierten Druckanteile bewirkt die Hydraulik-Baugruppe 110 eine Betätigung der Radbremse 115. Obwohl im Folgenden von nur einer einzigen Radbremse 115 ausgegangen wird, können beliebig viele, gegebenenfalls individuell betätigbare Radbremsen 115 durch die Hydraulik-Baugruppe 110 betätigt werden.

Wird die Radbremse 115 betätigt, wird das Kraftfahrzeug (nicht dargestellt), in welchem sich alle dargestellten Komponenten befinden, abgebremst und damit verzögert. Auf diese Weise wirkt die Radbremse 115 mittelbar auf die Erfassungseinrichtung 120, welche die Verzögerung des Kraftfahrzeugs erfasst. Dieser Zusammenhang ist durch den gestrichelten Pfeil in Fig. 1 angedeutet. Die Erfassungseinrichtung 120 kann beispielsweise Geschwindigkeitsmesswerte oder Messwerte von einem oder mehreren Raddrehzahlsensoren des Kraftfahrzeugs verarbeiten. Die elektronische Steuereinheit 125 steuert auf der Basis eines von der Erfassungseinrichtung 120 bereitgestellten Verzögerungswertes die Druckerzeugungseinrichtung 130, die den zweiten Druckanteil am Bremsdruck erzeugt.

Mittels der in Fig. 1 dargestellten Anordnung kann, wie nachfolgend beschrieben wird, ein hydraulischer Bremsassistent in einem Kraftfahrzeug-Bremssystem 100 integriert werden, der ohne einen Drucksensor zur Bestimmung eines fahrergesteuerten Drucks auskommt.

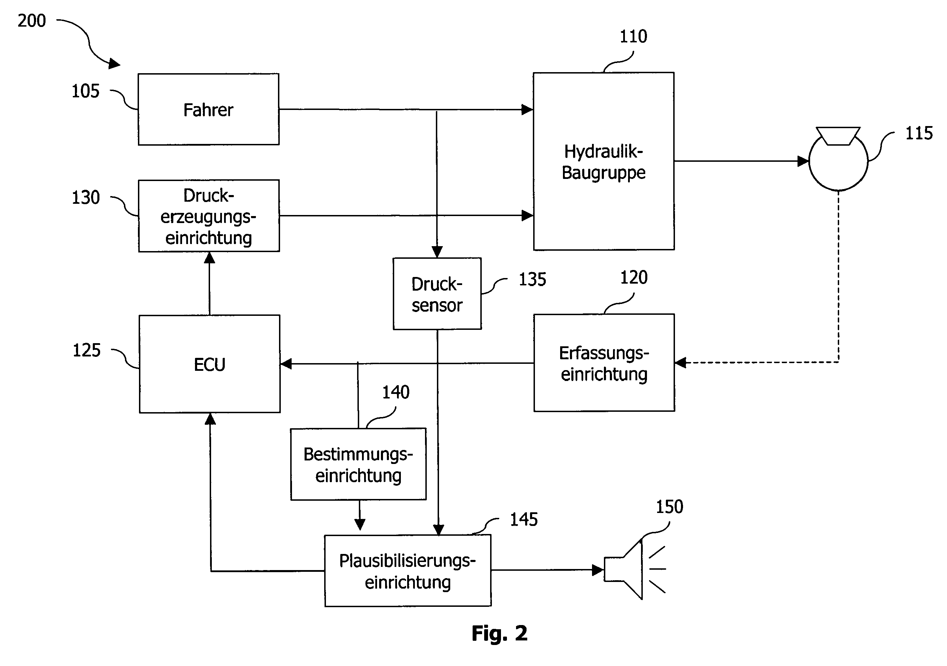

Fig. 2 zeigt ein erfindungsgemäßes Ausführungsbeispiel eines hydraulischen Kraftfahrzeug-Bremssystems 200, welches eine Erweiterung des in Fig. 1 gezeigten hydraulischen Kraftfahrzeug-Bremssystems 100 darstellt. Zusätzlich zu den bereits im Zusammenhang mit Fig. 1 beschriebenen Elementen des Bremssystems 100 umfasst das Kraftfahrzeug-Bremssystem 200 einen Drucksensor 135, eine Bestimmungseinrichtung 140, eine Plausibilitätseinrichtung 145 und eine Warneinrichtung 150.

Mittels der Bestimmungseinrichtung 140 wird auf der Basis des von der Erfassungseinrichtung 120 bereitgestellten Verzögerungssignals wie im Zusammenhang mit Fig. 1 beschrieben ein erster Druckwert des vom Fahrer 105 erzeugten ersten Druckanteils (des Hauptzylinderdrucks) der Hydraulik-Baugruppe 110 bestimmt. Außerdem wird mittels des Sensors 135 ein zweiter Druckwert des ersten Druckanteils erfasst. Die beiden Druckwerte werden der Plausibilisierungseinrichtung 145 zur Plausibilitätskontrolle bereitgestellt.

Die Plausibilisierungseinrichtung 145 bestimmt eine Plausibilität des vom Drucksensor 135 bereitgestellten zweiten Druckwerts auf der Basis des durch die Bestimmungseinrichtung 140 bereitgestellten ersten Druckwerts. Als Resultat dieser Plausibilitäts-kontrolle stellt die Plausibilisierungseinrichtung 145 ein Plausibilitätssignal an die ECU 125 bereit. Im Fall einer erfolgreichen Plausibilisierung wird der vom Drucksensor 135 bereitgestellte zweite Druckwert als zulässig erkannt und nachfolgenden Steuer- oder Regelmechanismen zugrunde gelegt. Diese Mechanismen können insbesondere die an und für sich bekannte Funktionalität eines hydraulischen Bremsassistenten umfassen. Weiter ist die Plausibilisierungseinrichtung 145 dazu ausgebildet, im Fall mangelnder Plausibilität des zweiten Druckwertes mittels der Warneinrichtung 150 eine Warnung auszugeben und/oder den zweiten Druckwert mit dem ersten Druckwert zu überschreiben.

Durch die mittels der Kontrolleinrichtung 140 durchgeführte Plausibilitätskontrolle ist es im Bremssystem 200 möglich, einen (kostengünstigen) Drucksensor 135 gewöhnlicher Güte zur Steuerung des hydraulischen Bremsassistenten zu verwenden, und eine hohe Betriebssicherheit der Funktionalität eines hydraulischen Bremsassistenten durch die Plausibilitätsüberprüfung eines Hauptzylinder-Druckwertes mittels der Kontrolleinrichtung 145 sicher zu stellen.

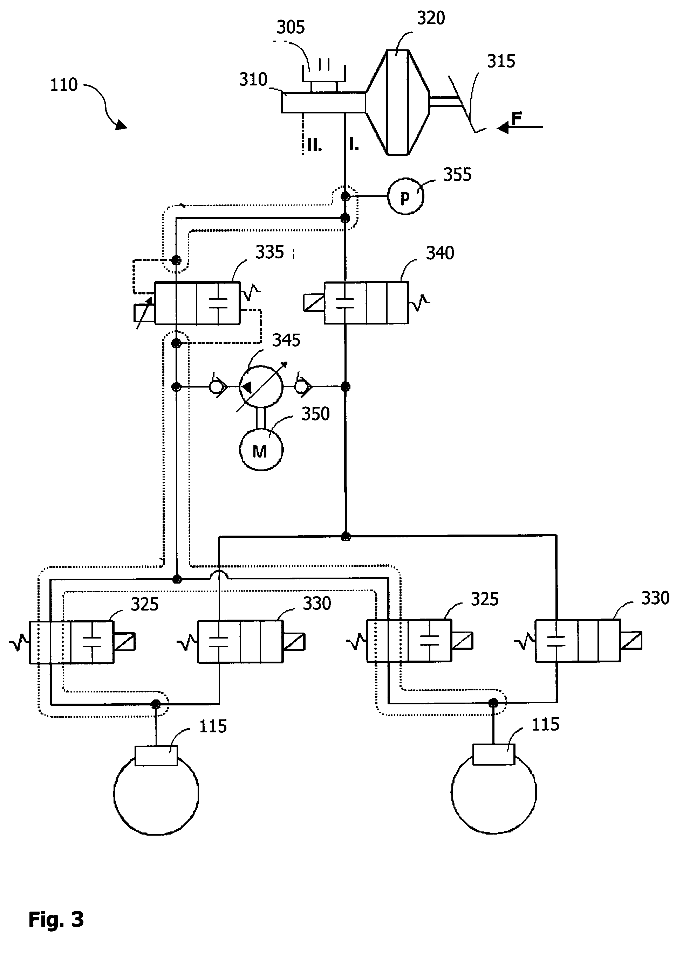

Fig. 3 zeigt Details der hydraulischen Hydraulik-Baugruppe 110 aus den Fign. 1 und 2 in einer Grundstellung. Die Hydraulik-Baugruppe 110 arbeitet mittels eines Hydraulikfluids, das zum Teil in einem Behälter 305 bevorratet ist. Zum Erzeugen von Bremsdruck, der durch Unter-Druck-Setzen des Hydraulikfluids entsteht, dient ein Haupt-(Brems-)Zylinder 310, der vom Fahrer (nicht dargestellt) durch ein Pedal 315 zu betätigen ist. Die vom Fahrer eingeleitete Kraft F wird durch einen Bremskraftverstärker 320 pneumatisch verstärkt.

Vom Hauptzylinder 310 ausgehend werden ein erster und ein zweiter Bremskreis I., II. versorgt, wobei jeder Bremskreis zwei Radbremsen 115 umfasst. Da die Bremskreise I., II. im Wesentlichen identisch aufgebaut sind, ist hier nur der erste Bremskreis I. im Detail dargestellt. In Abhängigkeit davon, welche Radbremsen des Kraftfahrzeugs von welchem Bremskreis versorgt werden, ergibt sich eine Vorder-/Hinterachs-Aufteilung, d.h. der eine Bremskreis versorgt die Radbremsen der Vorderachse und der andere die der Hinterachse, oder eine diagonale Aufteilung, d.h. jeder Bremskreis versorgt die Radbremse eines Vorderrades und die des diagonal gegenüberliegenden Hinterrades. Für die vorliegenden Ausführungsbeispiele ist eine individuelle Modulation des Bremsdrucks in den Radbremsen 115 nicht von Belang, weshalb im Folgenden nicht zwischen den Radbremsen 115 differenziert wird.

Die hydraulische Verbindung vom Hauptzylinder 310 zu den Radbremsen 115 wird von durch Elektromagnete betätigte 2/2-Wege-Ventile 325, 330, 335 und 340 bestimmt, die in unbetätigtem, also elektrisch nicht angesteuertem Zustand die in Fig. 3 dargestellten Grundstellungen einnehmen. Grundstellung heißt hier im Einzelnen, dass die Ventile 325 und 335 jeweils ihre Durchlassstellung, die Ventile 330 und 340 hingegen jeweils ihre Sperrstellung einnehmen.

Zum Ausführen von Betriebsbremsungen mittels der Hydraulik-Baugruppe 110 besteht bei der dargestellten Grundstellung der Ventile 325, 330, 335 und 340 eine unmittelbare hydraulische Verbindung zwischen dem Hauptzylinder 310 und den Radbremsen 115. Dadurch herrscht bei betätigtem Bremspedal 315 in den Radbremsen 115 ein Bremsdruck vor, dessen Betrag von der vom Fahrer 105 eingeleiteten Kraft F abhängt.

Der im Hauptzylinder 310 herrschende Druck wird mittels eines optionalen Drucksensors 355 erfasst. Der Drucksensor 355 kann bei dem Beispiel gemäß Fig. 1 weggelassen werden.

Die in Fig. 3 dargestellte Hydraulik-Baugruppe 110 ist an sich im Stand der Technik bekannt und wird in Kraftfahrzeugen verbaut, um eine ABS- und/oder ESP-Funktionalität zu realisieren. Eine Beschreibung der diesbezüglichen bekannten Funktionsweisen, insbesondere der Aussteuerung der Ventile 325-340 und des Elektromotors 350 während einer Druckaufbau-, einer Druckhalte- und einer Druckabbauphase an der Radbremse 115 unterbleibt daher an dieser Stelle.

Führt der Fahrer - ausgehend von oder anstatt einer Betriebsbremsung - eine Panikbremsung durch, so kann dies beispielsweise anhand eines Druckanstiegs im Haupt-zylinder 310, der schneller als ein vorbestimmtes Maß ist, festgestellt werden. In diesem Fall wird eine automatische hydraulische Verstärkung des Bremsdrucks durchgeführt, um den Fahrer zu unterstützen.

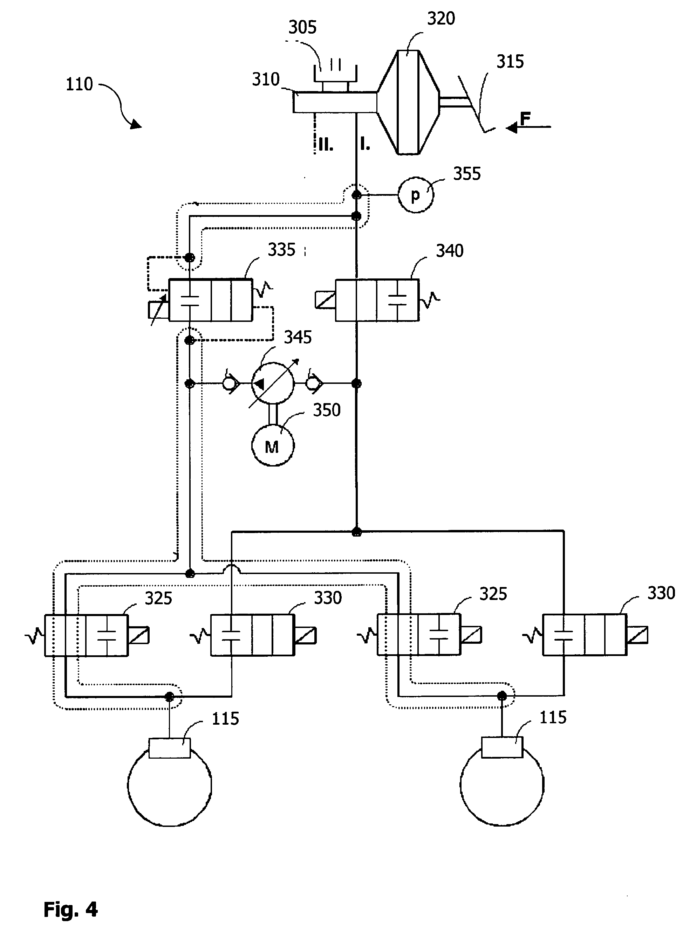

Fig. 4 zeigt die Hydraulik-Baugruppe aus Fig. 3 während einer solchen hydraulischen Bremsdruckverstärkung. Im Unterschied zu Fig. 3 befindet sich das Druckbegrenzungsventil 335 in einer Sperrstellung und das Ventil 340 in einer Durchlassstellung; außerdem betätigt ein Elektromotor 350 eine Pumpe 345 zur Erzeugung eines zusätzlichen Druckanteils.

In der in Fig. 4 gezeigten Stellung des Druckbegrenzungsventils 335 besteht keine unmittelbare hydraulische Verbindung zwischen dem Hauptzylinder 310 und den Radbremsen 110. Stattdessen gibt das Ventil 340 eine hydraulische Verbindung vom Hauptzylinder 310 zu einer Saugseite der Pumpe 345 frei. Die zum Beispiel als Radialkolbenpumpe ausgeführte Pumpe 345 dient zum Erhöhen eines den Radbremsen 115 zur Verfügung gestellten, auf den Fahrer zurückgehenden Bremsdruckanteils. Die elektromotorische Pumpe 345 ist entgegen ihrer Förderrichtung sperrend. Da die Drehzahl des Elektromotors 350 üblicherweise einstellbar bzw. regelbar ist, kann die Fördermenge der Pumpe 345 eingestellt werden. Auch ist es üblich, dass der Elektromotor 350 gleichzeitig die Pumpe des hier nicht im Detail dargestellten zweiten Bremskreises II. betätigt.

Die Pumpe 345 saugt bereits unter dem fahrererzeugten Druck stehendes Hydraulikfluid aus dem Hauptzylinder 310 an. Über diesen Druckanteil hinaus erzeugt die Pumpe 345 einen zusätzlichen Druckanteil, so dass an der Druckseite der Pumpe 345 Hydraulikfluid unter einem Druck bereitgestellt wird, der einen ersten, fahrergesteuerten Anteil und einen zweiten, durch die Pumpe 345 erzeugten Anteil umfasst. Das unter diesem kumulierten Druck stehende Hydraulikfluid wirkt schließlich auf die Radbremsen 115, so dass diese das Kraftfahrzeug (nicht dargestellt) abbremst.

Das Ventil 335 ist ein elektronisch einstellbares Druckbegrenzungsventil ("ISO-Ventil"). In Abhängigkeit eines elektrischen Steuersignals (beispielsweise eines pulsbreitenmodulierten Signals) wird eine maximale Druckdifferenz zwischen einer Einlass- und einer Auslassseite des Druckbegrenzungsventils 335 eingestellt. Übersteigt die anliegende Druckdifferenz den eingestellten Wert, so öffnet sich das geschlossene Druckbegrenzungsventil 335 selbsttätig.

Während der erste, auf den Fahrer zurückgehende Druckanteil auf beide Seiten des Druckbegrenzungsventils 335 gleich wirkt - unmittelbar auf die Einlassseite, mittelbar durch das Ventil 340 und die Pumpe 345 auf die Auslassseite - wirkt der zweite, durch die Pumpe 345 erzeugte Druckanteil lediglich auf die Einlassseite des Druckbegrenzungsventils 335. Eine Änderung des ersten, auf den Fahrer zurückgehenden Druckanteils wirkt sich also nicht auf die Druckbegrenzung durch das Druckbegrenzungsventil 335 aus, vielmehr ist der fahrergesteuerte Druckanteil des Bremsdrucks unabhängig von der Druckbegrenzungsfunktion. Daher verändert sich bei einer Veränderung des ersten, fahrergesteuerten Druckanteils der auf die Radbremsen 115 wirkende gesamte Bremsdruck und damit auch die Verzögerung a des Kraftfahrzeugs entsprechend der Veränderung. Bei einer gleichbleibenden Ansteuerung des Druckbegrenzungsventils 335 und des Motors 350 besteht also eine Proportionalität zwischen der Fahrzeugverzögerung a (bzw. einem auf diese hinweisenden Parameter) und dem im Hauptzylinder 310 herrschenden ersten Druckanteil. Bei bekannter Ansteuerung des Druckbegrenzungsventils 335 und des Motors 350 kann so von einer bestimmten Verzögerung a auf einen fahrergesteuerten, ersten Druckanteil rückgeschlossen werden.

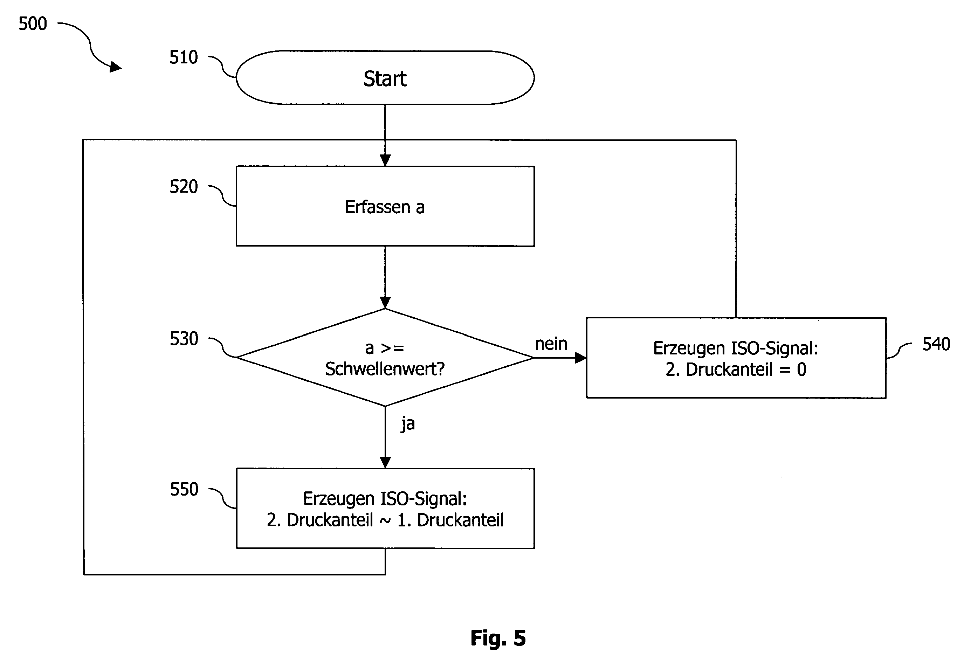

Fig. 5 zeigt ein Ablaufdiagramm 500 eines Verfahrens zur Bremsdruckverstärkung in einem Kraftfahrzeug-Bremssystem wie dem von Fig. 1 oder 2. Das Verfahren beginnt in einem Schritt 510. In einem folgenden Schritt 520 wird eine Fahrzeugverzögerung a erfasst. Diese wird in einem folgenden Schritt 530 mit einem Schwellenwert verglichen. Liegt die Verzögerung a unterhalb des Schwellenwerts, so fährt das Verfahren mit einem Schritt 540 fort, in welchem eine Druckbereitstellungseinrichtung derart angesteuert wird, dass der von ihr erzeugte Druck 0 ist. Anschließend kehrt das Verfahren zum Schritt 520 zurück.

Wird in Schritt 530 jedoch bestimmt, dass der Verzögerungswert a größer oder gleich dem Schwellenwert ist, so fährt das Verfahren mit einem Schritt 550 fort. In diesem Schritt wird die Druckbereitstellungseinrichtung derart angesteuert, dass der von ihr erzeugte zweite Druckanteil beispielsweise proportional zum ersten Druckanteil ist. Anschließend fährt das Verfahren wieder mit Schritt 520 fort.

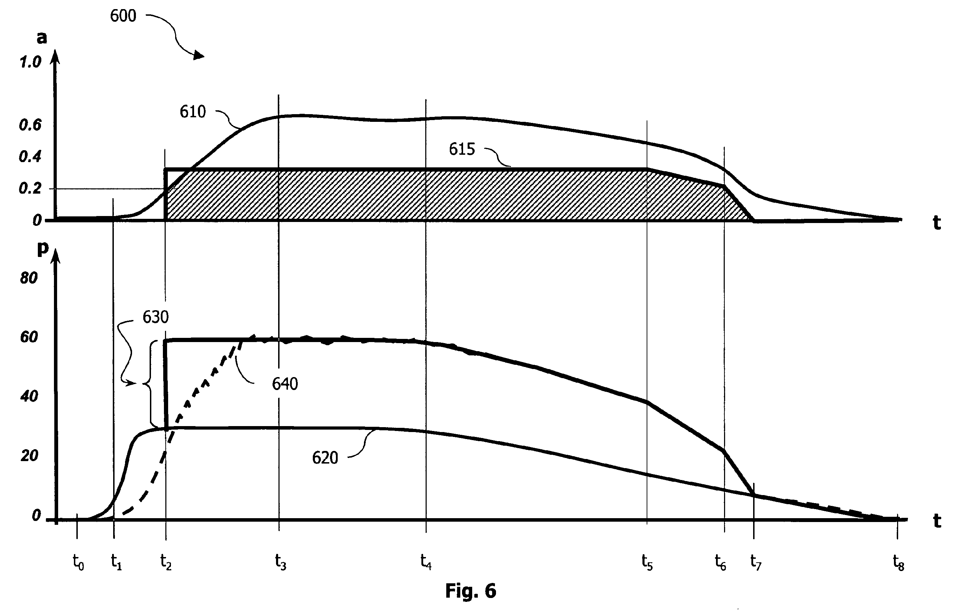

Fig. 6 zeigt exemplarische Verläufe einer Verzögerung eines Kraftfahrzeugs und verschiedenen Drücken während einer Bremsung mit hydraulischer Bremsdruckverstärkung in einem Kraftfahrzeug-Bremssystem wie in Fign. 1 oder 2.

Der obere und der untere Teil von Fig. 6 beziehen sich auf eine gemeinsame, horizontal verlaufende Zeitachse t. Im oberen Teil von Fig. 6 ist in vertikaler Richtung eine Verzögerung (a in [g]) angetragen. Ein Verlauf einer Fahrzeugverzögerung 610 und ein Anteil 615 eines durch die Pumpe 345 bereitgestellten Verstärkungsdrucks 630 sind eingezeichnet. Im unteren Teil von Fig. 6 ist in vertikaler Richtung ein Druck (p in [bar]) angetragen. Hier sind ein Verlauf eines Hauptzylinderdrucks 620 im Hauptzylinder 310 von Fig. 4 (erster Druckanteil), ein Verlauf eines durch die Pumpe 345 von Fig. 4 erzeugten Verstärkungsdrucks 630 (zweiter Druckanteil) und ein Verlauf eines Radbremsdrucks 640 (gestrichelte Linie) an einer Radbremse 115 von Fign. 1 bis 3 eingezeichnet. Es ist zu beachten, dass im unteren Teil von Fig. 6 der Verstärkungsdruck 630 mit Bezug auf den Hauptzylinderdruck 620 dargestellt ist, so dass der am Ausgang der Pumpe 345 zur Verfügung stehende Bremsdruck als Summe des Hauptzylinderdrucks 620 und des Verstärkungsdrucks 630 in Fig. 6 unmittelbar ablesbar ist.

Zu einem Zeitpunkt t₀ beginnt der Hauptzylinderdruck 620, aufgrund einer Betätigung der Hydraulik-Baugruppe 110 durch den Fahrer 105, anzusteigen. Mit einer kurzen Verzögerung, die durch das Fließverhalten von Hydraulikflüssigkeit durch die Hydraulik-Baugruppe 110 begründet ist, steigen ab einem Zeitpunkt t₁ auch der Radbremsdruck 640 und die Fahrzeugverzögerung 610 an.

Zu einem Zeitpunkt t₂, der sich danach bemisst, wann die Verzögerung 610 einen vorbestimmten Wert (hier: 0,2 g) erreicht hat, wird überprüft, ob die Verzögerung 610 schneller als ein vorbestimmtes Maß ansteigt. Dieser Vorgang entspricht Schritt 420 in Fig. 5. Im dargestellten Beispiel ist dies der Fall, so dass ab dem Zeitpunkt t₂ mittels der Pumpe 345 der Verstärkungsdruck 630 erzeugt wird (vgl. Schritt 450 in Fig. 5).

In Folge des zusätzlichen Verstärkungsdrucks 630 steigt mit einer leichten Verzögerung (siehe oben) auch der Radbremsdruck 640 stärker an, bis er ein Maximum bei dem Druckwert findet, welcher der Summe aus dem Hauptzylinderdruck 620 und dem Verstärkungsdruck 630 entspricht. Die den Radbremsdruck 640 überlagerten geringen Schwankungen rühren von einer Druckmodulation eines ABS- bzw. ESP-Systems her und sind im gegebenen Zusammenhang nicht weiter von Bedeutung. In analoger Weise wie der Radbremsdruck 640 steigt auch die Fahrzeugverzögerung 610 an.

Zu einem Zeitpunkt t₃ haben sowohl der Radbremsdruck 640, als auch die Verzögerung 610 ihr jeweiliges Maximum erreicht. Bis zum Zeitpunkt t₄ bleiben die Werte 610-640 im Wesentlichen konstant. Zum Zeitpunkt t₄ beginnt der Hauptzylinderdruck 620, fahrergesteuert nachzulassen. Übereinstimmend sinken auch der Radbremsdruck 640 und die Verzögerung 610. Der Verstärkungsdruck 630 bleibt jedoch - bezogen auf den Hauptzylinderdruck 620 - zunächst im Wesentlichen konstant.

Der Zeitpunkt t₅ bestimmt sich danach, wann der Anteil des Hauptzylinderdrucks 620 an der Verzögerung des Fahrzeugs kleiner als 50% ist. Ab diesem Zeitpunkt wird der Verstärkungsdruck 630 proportional zum Absinken des Hauptzylinderdrucks 620 verringert. Infolge dessen verringert sich auch der Verzögerungsanteil 615, und der Radbremsdruck 640 und die Verzögerung 610 sinken weiter ab.

Der Zeitpunkt t₆ ist dadurch definiert, dass der Verstärkungsdruck 630 kleiner als eine vorbestimmte Schwelle (hier: 20 bar) wird, bzw. dadurch, dass die durch den Verstärkungsdruck 630 bewirkte Verzögerung des Kraftfahrzeugs auf einen geringeren als ein vorbestimmter Wert (hier: 0,2 g) absinkt. Ab dem Zeitpunkt t₆ wird der Verstärkungsdruck 630 rampenförmig auf einen Wert von 0 reduziert, worauf hin auch der Verzögerungsanteil 615 auf 0 abfällt. In der gezeigten Darstellung erreicht der Verstärkungsdruck 630 (und somit auch der Verzögerungsanteil 615) zum Zeitpunkt t₇ den Wert 0. Bis zum Ende der Bremsung zum Zeitpunkt t₆ folgt daher der Radbremsdruck 640 nur noch dem Hauptzylinderdruck 620. In korrespondierender Weise sinkt auch die Verzögerung 610 zwischen dem Zeitpunkt t₇ und t₈ nur noch langsam auf 0 ab.

Durch die vorgestellte Technik ist es möglich, einen hydraulischen Bremsassistenten in einem hydraulischen Kraftfahrzeug-Bremssystem zu implementieren, der vollständig ohne oder mit einem einfachen (und kostengünstigen) Sensor zum Bestimmen eines Hauptzylinderdrucks auskommt. Dadurch können einerseits Kosten bei der Produktion eingespart werden, und andererseits können Fahrzeuge, die bereits über ABS- bzw. ESP-Systeme der genannten Voraussetzungen verfügen, mit geringem Aufwand mit einem hydraulischen Bremsassistenten nachgerüstet werden.

## Patentansprüche

1. Verfahren (500) zur hydraulischen Bremsdruckverstärkung in einem hydraulischen Kraftfahrzeug-Bremssystem (100, 200), folgende Schritte umfassend:
- fahrergesteuertes Erzeugen eines ersten Druckanteils (620) eines Bremsdrucks (640) im Bremssystem (100, 200);
- Erfassen (420) eines auf eine Verzögerung des Fahrzeugs hinweisenden Verzögerungswerts (a);
- Bestimmen eines dem ersten Druckanteil (620) zugeordneten ersten Druckwertes auf der Basis des Verzögerungswerts (a);
- Überprüfen einer Plausibilität eines mittels eines Drucksensors (135) bestimmten und dem ersten Druckanteil (620) zugeordneten zweiten Druckwertes auf der Basis des ersten Druckwertes;
und, im Fall einer erfolgreichen Plausiblisierung,
- Erzeugen (550) eines zusätzlichen zweiten Druckanteils (630), wobei der zweite Druckanteil (630) in Abhängigkeit vom zweiten Druckwert erzeugt wird.

2. Verfahren nach Anspruch 1, wobei der zweite Druckanteil (630) derart erzeugt wird, dass er im Wesentlichen proportional zum ersten Druckanteil (620) ist.

3. Verfahren nach Anspruch 1 oder 2, wobei der zweite Druckanteil (630) in Abhängigkeit eines Absolutwerts oder einer Änderungsgeschwindigkeit des Verzögerungswerts (a) erzeugt wird.

4. Verfahren nach einem der vorangehenden Ansprüche, ferner umfassend den Schritt des Ansteuerns einer Druckbereitstellungseinrichtung (345) zur Erzeugung des zweiten Druckanteils (630).

5. Verfahren nach einem der vorangehenden Ansprüche, ferner umfassend den Schritt des Begrenzens des zweiten Druckanteils (630) und/oder des Bremsdrucks (640).

6. Verfahren nach einem der vorangehenden Ansprüche, ferner umfassend den Schritt des Vergleichens des ersten Druckwertes mit dem zweiten Druckwert.

7. Verfahren nach einem der vorangehenden Ansprüche, ferner umfassend den Schritt des Ausgebens eines Warnsignals bei Bestimmen einer mangelnden Plausibilität des zweiten Druckwerts.

8. Computerprogrammprodukt mit Programmcodemitteln zur Durchführung eines Verfahrens nach einem der vorangegangenen Ansprüche, wenn das Computerprogrammprodukt auf einer Verarbeitungseinheit (125) läuft.

9. Computerprogrammprodukt nach dem vorangehenden Anspruch, wenn es auf einem computerlesbaren Datenträger gespeichert ist.

10. Vorrichtung zur hydraulischen Bremsdruckverstärkung in einem hydraulischen Kraftfahrzeug-Bremssystem (100, 200), wobei ein erster Druckanteil (620) eines Bremsdrucks (640) im Bremssystem (100, 200) fahrergesteuert erzeugbar ist, umfassend:
- eine Erfassungseinrichtung (120) zur Erfassung eines auf eine Verzögerung des Fahrzeugs hinweisenden Verzögerungswerts (a);
- eine Bestimmungseinrichtung (140) zur Bestimmung eines dem ersten Druckanteil (620) zugeordneten ersten Druckwertes auf der Basis des Verzögerungswerts (a);
- eine Plausibilisierungseinrichtung (145) zur Plausibilisierung eines mittels eines Drucksensors bestimmten und dem ersten Druckanteil (620) zugeordneten zweiten Druckwerts auf Basis des ersten Druckwertes; und
- eine Druckerzeugungseinrichtung (130) zur, im Fall einer erfolgreichen Plausibilisierung, Erzeugung eines zusätzlichen zweiten Druckanteils (630), wobei der zweite Druckanteil (630) in Abhängigkeit vom zweiten Druckwert erzeugt wird.

11. Vorrichtung nach Anspruch 10 , **dadurch gekennzeichnet, dass** sie ferner eine Begrenzungseinrichtung (335) zur Begrenzung des zweiten Druckanteils (630) und/oder des Bremsdrucks umfasst.

## Claims

1. Method (400) of boosting the hydraulic brake pressure in a hydraulic motor vehicle brake system (100, 200), comprising the following steps:
- generating a first pressure component (620) of a brake pressure (640) in the brake system (100, 200) in a driver-controlled manner,
- acquiring (420) a deceleration value (a) that indicates a deceleration of the vehicle;
- determining a first pressure value, which is associated with the first pressure component, on the basis of the deceleration value (a);
- checking a plausibility of a second pressure value, which is determined by means of a pressure sensor (135) and associated with the first pressure component (620);
and in the case of a successful plausibility check:
- generating (550) an additional second pressure component (630), wherein the second pressure component (630) is a function of the second pressure value.

2. Method according to claim 1, wherein the second pressure component (630) is generated in such a way that it is substantially proportional to the first pressure component (620).

3. Method according to claim 1 or 2, wherein the second pressure component (630) is generated as a function of an absolute value or a rate of change of the deceleration value (a).

4. Method according to one of the preceding claims, further comprising the step of activating a pressure supply device (345) for generating the second pressure component (630).

5. Method according to one of the preceding claims, further comprising the step of limiting the second pressure component (630) and /or the brake pressure (640).

6. Method according to one of the preceding claims , further comprising the step of comparing the first pressure value with the second pressure value.

7. Method according to one of the preceding claims, further comprising the step of outputting an alarm signal upon determining a lack of plausibility of the second pressure value.

8. Computer program product having program code means for executing a method according to one of the preceding claims when the computer program product runs on a processing unit (125).

9. Computer program product according to the preceding claim when it is stored on a computer-readable data carrier.

10. Device for boosting the hydraulic brake pressure in a hydraulic motor vehicle brake system (100, 200), wherein a first pressure component (620) of a brake pressure (640) in the brake system (100, 200) can be generated in a driver-controlled manner, comprising:
- an acquisition device (120) for acquiring a deceleration value (a) that indicates a deceleration of the vehicle;
- a determination device (140) for determining a first pressure value (620), which is associated with the first pressure component, on the basis of the deceleration value (a);
- a plausibility checking device (145) for checking the plausibility of a second pressure value, which is determined by means of a pressure sensor and associated with the first pressure component (620); and
- a generating device (130) for, in the event of a successful plausibility check, generating an additional second pressure component (630), wherein the second pressure component (630) is generated as a function of the second pressure value.

11. Device according to claim 10, **characterized in that** it further comprises a limiting device (335) for limiting the second pressure component (630) and/or the brake pressure.

## Revendications

1. Procédé (500) d'amplification hydraulique de la pression de freinage dans un système de freinage hydraulique de véhicule (100, 200), comportant les étapes suivantes :
- la génération, initiée par le conducteur, d'une première fraction de pression (620) d'une pression de freinage (640) dans le système de freinage (100, 200),
- la détection (420) d'une valeur de ralentissement (a) indiquant un ralentissement du véhicule,
- la détermination, sur la base de ladite valeur de ralentissement (a), d'une première valeur de pression associée à la première fraction de pression (620),
- la vérification, sur la base de la première valeur de pression, d'une plausibilité éventuelle d'une deuxième valeur de pression associée à la première fraction de pression (620) et déterminée au moyen d'un capteur de pression (135) et, dans le cas d'une plausibilité confirmée,
- la génération (550) d'une deuxième fraction de pression supplémentaire (630), cette deuxième fraction de pression (630) étant générée en fonction de ladite deuxième valeur de pression.

2. Procédé selon la revendication 1, la deuxième fraction de pression (630) étant générée de manière à être sensiblement proportionnelle à la première fraction de pression (620).

3. Procédé selon la revendication 1 ou 2, la deuxième fraction de pression (630) étant générée en fonction d'une valeur absolue ou d'une vitesse de modification de la valeur de ralentissement (a).

4. Procédé selon l'une des revendications précédentes, comportant en outre l'étape consistant en la commande d'un dispositif de mise à disposition de pression (345) servant à générer la deuxième fraction de pression (630).

5. Procédé selon l'une des revendications précédentes, comportant en outre l'étape consistant en la limitation de la deuxième fraction de pression (630) et/ou de la pression de freinage (640).

6. Procédé selon l'une des revendications précédentes, comportant en outre l'étape consistant en la comparaison de la première valeur de pression à la deuxième valeur de pression.

7. Procédé selon l'une des revendications précédentes, comportant en outre l'étape consistant en la sortie d'un signal d'avertissement lorsqu'est constaté un défaut de plausibilité pour la deuxième valeur de pression.

8. Produit logiciel informatique contenant des moyens de code pour exécuter un procédé selon l'une des revendications précédentes lorsque le produit logiciel informatique tourne sur une unité de traitement (125).

9. Produit logiciel informatique selon la revendication précédente, lorsque celui-ci est enregistré sur un support de données lisible par ordinateur.

10. Dispositif d'amplification hydraulique de la pression de freinage dans un système de freinage hydraulique de véhicule (100, 200), une première fraction de pression (620) d'une pression de freinage (640) pouvant être générée sur la demande du conducteur, comprenant :
- un dispositif de détection (120) pour détecter une valeur de ralentissement indiquant un ralentissement du véhicule (a),
- un dispositif de détermination (140) servant à déterminer, sur la base de ladite valeur de ralentissement (a), une première valeur de pression associée à la première fraction de pression (620),
- un dispositif de vérification de plausibilité (145) servant à vérifier, sur la base de la première valeur de pression, la plausibilité d'une deuxième valeur de pression associée à la première fraction de pression (620) et déterminée au moyen d'un capteur de pression, et
- un dispositif de génération de pression (130) pour, dans le cas d'une plausibilité confirmée, générer une deuxième fraction de pression supplémentaire (630), cette deuxième fraction de pression (630) étant générée en fonction de la deuxième valeur de pression.

11. Dispositif selon la revendication 10, **caractérisé en ce que** ce dispositif comprend en outre un dispositif de limitation (335) servant à limiter la deuxième fraction de pression (630) et/ou la pression de freinage.
